# EUROPÄISCHE PATENTANMELDUNG

(11) **EP 1 385 033 A1**
(43) Veröffentlichungstag der Anmeldung: **28.01.2004**
(21) Anmeldenummer: 02016580.9
(22) Anmeldetag: 25.07.2002
(51) Int. Cl.: G02B 6/42

(54) **Anordnung zum Ankoppeln wenigstens einer Lichtleitfaser an ein optisches Empfangs- oder Sendeelement, Verfahren zum Herstellen einer solchen Anordnung, Halteanordnung zum Halten einer Mehrzahl von Lichtleitfasern sowie ein Verfahren zu deren Herstellung**

(71) Anmelder: Opto Speed Holding SA, 6805 Mezzovico (CH)
(72) Erfinder: Hunziker, Werner, 8046 Zürich (CH); Blaser, Markus, 8055 Zürich (CH)
(74) Vertreter: Müller, Christoph Emanuel

(57) **Zusammenfassung**

In einer Anordnung zum Ankoppeln wenigstens einer Lichtleitfaser an ein optisches Empfangs- oder Sendeelement (3) wird eine Lichtleitfaser (10) an einem Halbleiterelement (3) angeordnet. Auf einer Oberfläche (4b) des Halbleiterelementes (3) wird eine Vertiefung (5) vorgesehen. Eine Lichtleitfaser (10) wird im Wesentlichen parallel zu der Oberfläche (4b) angeordnet und weist im Bereich der Vertiefung (5) des Halbleiterelementes (3) eine Endfläche auf. Eine Umlenkanordnung (13) dient zum Umlenken von Licht in die Lichtleitfaser (10) oder aus der Lichtleitfaser (10). Um den Abstand zwischen dem Kern (19) der Lichtleitfaser und dem Halbleiterelement (3) zu verringern, ist die Lichtleitfaser in einem Endbereich (11) auf einen Durchmesser (d) reduziert, der kleiner ist als der Durchmesser (D) der Lichtleitfaser (10) ausserhalb des Endbereichs (11).

## Beschreibung

Die Erfindung betrifft eine Anordnung zum Ankoppeln wenigstens einer Lichtleitfaser an optische Empfangs- oder Sendeelemente und ein Verfahren zum Herstellen einer solchen Anordnung mit den Merkmalen des Oberbegriffs der unabhängigen Patentansprüche. Die Erfindung betrifft ausserdem eine Halteanordnung zum Koppeln einer Mehrzahl von Lichtleitfasern an kleine photoelektrische Elemente sowie ein Verfahren zu deren Herstellung.

Bei Anwendung von fasergekoppelten optischen Elementen auf Printplatten oder in Geräten ist es bevorzugt, dass die Lichtleitfaser seitlich vom elektrooptischen Element absteht und im Wesentlichen parallel zu den elektrischen Verbindungen verläuft. Eine solche Anordnung ist sowohl im Hinblick auf den Einbau solcher Printplatten in ein Rack als auch im Hinblick auf die Produktion der Printplatte mit dem optischen Element bevorzugt.

Damit das aus der Faser austretende Licht auf das fotoelektrische Element gelangt oder damit von dem fotoelektrischen Element abgegebenes Licht in die Faser eingekoppelt wird, sind bei oberflächenorientierten Elementen Umlenkanordnungen für das Licht erforderlich. Eine Umlenkung der elektrischen Leitungen des optoelektrischen Elementes ist vor allem bei sehr hohen elektrischen Frequenzen schwierig. Es ist beispielsweise bekannt, das Licht auf schräg polierten Endflächen der Lichtleitfaser umzulenken. Es ist ausserdem bekannt, direkt in einem elektrooptischen Element, beispielsweise in einer Fotodiode abgeschrägte Flächen anzubringen, um seitlich eintretendes Licht umzulenken. Eine solche Anordnung ist beispielsweise in US 6 246 097 oder in "large coupling tolerance sideilluminated mirror photodiode for low cost surface hybrid integration" (IEEE Photonics Technology Letters, vol. 11, No. 6, June, 1999, S. 709) gezeigt. In US 5 701 374 und US 6 049 638 ist eine solche Anordnung zur Koppelung eines Lichtleiters auf einem Substrat gezeigt, bei der aus dem Lichtleiter austretendes Licht an einer schräg eingeäzten Vertiefung in einer Fotodiode auf die aktive Fläche der Fotodiode'umgelenkt wird.

Aus US 6 353 250 ist ausserdem ein Fotodetektor bekannt, bei dem Licht seitlich eingeleitet und an einer seitlichen, abgeschrägten Fläche umgelenkt wird. Bei diesen bekannten Anordnungen ergeben sich aber insbesondere im Hinblick auf das Herstellverfahren Nachteile. Gemäss der letztgenannten US 6 353 250 lässt sich zwar der Weg, den das Licht im Fotodetektor-Material durchläuft, reduzieren. Das Anbringen von abgeschrägten Umlenkflächen an der Seite der Fotodiode ist aber herstelltechnisch komplex. Um Reflektionen zu vermeiden, ist es in der Praxis bei solchen Anordnungen ausserdem unabdingbar, eine Beschichtung vorzusehen. Auf Grund der notwendigen Bearbeitung der Seitenflächen des Chips müssen kleine Gruppen von Chips einzeln bearbeitet werden. Eine gemeinsame Bearbeitung auf dem Wafer ist nicht mehr möglich.

Aus EP 535 690 ist eine Fotodiode bekannt, bei welcher Licht aus einer Lichtleitfaser durch das Trägersubstrat von hinten auf die aktive Detektorfläche gelenkt wird. Die Lichtleitfaser ist in einer V-förmigen Vertiefung gehalten. Das Ende der Lichtleitfaser und die Wand der Vertiefung ist abgeschrägt, so dass das aus der Lichtleitfaser austretende Licht umgelenkt wird. Die Vertiefung dient lediglich zur Befestigung der Lichtleitfaser. Auch bei dieser Anordnung ist der Weg des Lichtes im Halbleitersubstrat verhältnismässig lang, so dass auf Grund der Divergenz des aus der Faser austretenden Lichtes der auftreffende Lichtfleck verhältnismässig gross ist.

Aus JP 09-090177 ist ebenfalls ein optisches Halbleiterelement bekannt, bei welchem eine optische Faser in einer V-förmigen Vertiefung angeordnet ist und bei welchem das aus der Lichtleitfaser austretende Licht durch eine schräg polierte Endfläche der Faser umgelenkt wird. Hier sind jedoch Faserhalter und Detektorelement verschiedene Komponenten.

In EP 634 676 ist eine Anordnung zur Ankoppelung einer Lichtleitfaser an ein optisches Empfangs- oder Sendeelement gezeigt, bei der die Umlenkung des Lichtes an einer Abschrägung einer Lichtstrahlumlenkeinrichtung erfolgt, welche auf einem Trägersubstrat angeordnet ist.

In EP 603 549 ist die Umlenkung eines Lichtstrahls an schrägen Flächen eines Trägersubstrats gezeigt.

Aus WO97/27507 ist es bekannt, eine in einer V-förmigen Vertiefung eines Trägers gehaltene Lichtleitfaser auf einer Seite abzuflachen, so dass der Abstand zwischen dem Kern der Lichtleitfaser und der aktiven Oberfläche eines optischen Elementes reduziert werden kann.

Vor allem bei optoelektrischen Elementen, welche mit hohen Frequenzen betrieben werden, typischerweise Fotodioden, welche mit mehr als 10 GHz betrieben werden sollen, ergeben sich geometrische Probleme. Bei solchen sehr kleinen Fotodioden ist eine optische Umlenkung bevorzugt, da eine Umlenkung der elektrischen Leitungen schwierig zu bewerkstelligen ist. Bei optischen Umlenkungen ergeben sich aber ebenfalls Probleme. Der optische Weg ist auf Grund der Umlenkung meist recht lang. Auf Grund der Divergenz des aus einer Lichtleitfaser austretenden Lichtes besteht die Gefahr, dass der auf der aktiven Fläche des fotoelektrischen Elementes auftreffende Lichtstrahl grösser ist als die aktive Oberfläche des fotoelektrischen Elementes. Probleme können sich sogar ergeben, wenn die Umlenkanordnung für das Licht durch eine schräg geschliffene Endfläche der Lichtleitfaser gebildet wird. Auf Grund der Divergenz des umgelenkten Lichtes kann der Durchmesser des Lichtstrahls bereits unmittelbar an der Oberfläche der Lichtleitfaser zu gross sein für sehr kleine optoelektrischen Elemente wie beispielsweise sehr kleine Fotodioden. Fotodioden für Höchstfrequenz-Anwendungen haben typischerweise eine aktive Oberfläche im Bereich von 10 bis 20 µm. Probleme ergeben sich insbesondere bei Single-Mode-Fasern mit einem Kerndurchmesser von beispielsweise 9 µm und mit einem äusseren Durchmesser von 125 µm.

Ein Nachteil bei den bekannten Lösungen besteht daher darin, dass sich die gezeigten Lichtempfangs- oder Sendeanordnungen nicht im Zusammenhang mit sehr kleinen fotoelektrischen Elementen einsetzen lassen. Beispielsweise ist bei der Lösung gemäss US 6 049 638 oder US 5 701 374 oder auch EP 535 690 der Weg zwischen der Umlenkanordnung und der aktiven Fläche des fotoelektrischen Elementes verhältnismässig gross, typischerweise ein Mehrfaches des Faserradius. Auf Grund der Divergenz des aus der Faser austretenden Lichtstrahls lässt sich diese Anordnung bei sehr kleinen Elementen nicht einsetzen. Die in WO97/27507 gezeigte Lösung ist im Hinblick auf den Herstellungs- und Montageprozess und auch im Hinblick auf die Empfindlichkeit der Fotodiode mit Nachteilen behaftet. Diese Lösung erfordert eine hochpräzise Herstellung und insbesondere Ausrichtung von drei Elementen relativ zueinander. Die im Hinblick auf die Empfindlichkeit der Fotodiode bevorzugte Flip-Chip Montage mit Rückseitenbeleuchtung ist beispielsweise nicht möglich. Rückseitenbeleuchtete Fotodioden sind ebenfalls besonders im Zusammenhang mit Fotodioden mit kleinen Dimensionen für Hochfrequenzanwendungen bevorzugt. Bei Rückseitenbeleuchtung kann die Vorderseite der Fotodiode verspiegelt werden. Dadurch kann das Licht zweimal durch die dünne Fotodiodenschicht gelangen, wodurch sich die Absorption bei kleiner Schichtdicke erhöhen lässt.

Es ist die Aufgabe der vorliegenden Erfindung, die Nachteile des Bekannten zu vermeiden, insbesondere also eine Anordnung zum Ankoppeln wenigstens einer Lichtleitfaser an ein optisches Empfangs- oder Sendeelement zu schaffen, welche sich auch im Zusammenhang mit für Höchstfrequenz-Anwendungen geeigneten fotoelektrischen Elementen einsetzen lässt und welche insbesondere auch die Verwendung mit Rückseiten beleuchteten als Flip-Chip montierten Fotodioden erlaubt, sowie möglichst wenige auszurichtende Elemente benötigt. Eine geringe Anzahl von verwendeten Elementen ist insbesondere im Hinblick auf die Präzision der hergestellten Vorrichtung und im Hinblick auf Herstellkosten vorteilhaft. Je geringer die Anzahl der Elemente ist, um so einfacher ist auch die Montage, da weniger Teile präzise gegeneinander ausgerichtet und fixiert werden müssen.

Eine weitere Aufgabe der Erfindung besteht darin, ein Verfahren zum Herstellen einer solchen Anordnung zu schaffen. Noch eine weitere Aufgabe der Erfindung besteht darin, eine Halteanordnung zum Halten einer Mehrzahl von Lichtleitfasern und zum Positionieren und Befestigen der Lichtleitfasern an solchen kleinen optischen Empfangs- oder Sendeelementen zu schaffen. Die Haltevorrichtung soll insbesondere auch zum Halten von Lichtleitfasern in der vorstehend beschriebenen Anordnung zum Ankoppeln von Lichtleitfasern an optische Elemente einsetzbar sein.

Erfindungsgemäss werden diese Aufgaben mit einer Anordnung zum Ankoppeln einer Lichtleitfaser, einem Verfahren zum Herstellen einer solchen Anordnung und mit einer Halteanordnung zum Halten einer Mehrzahl von Lichtleitfasern und mit einem Verfahren zu deren Herstellung mit den Merkmalen des kennzeichnenden Teils der unabhängigen Patentansprüche gelöst.

Die Anordnung zum Ankoppeln wenigstens einer Lichtleitfaser an wenigstens einem optischen Empfangs- oder Sendeelement besteht im Wesentlichen aus einem Halbleiterelement und der oder den Lichtleitfasern. Das Halbleiterelement hat eine erste und eine zweite Oberfläche. Die zweite Oberfläche ist der ersten Oberfläche gegenüberliegend. Die Anordnung kann typischerweise zum Ankoppeln einer einzigen Lichtleitfaser an ein Empfangs- oder Sendeelement dienen. Es ist aber auch denkbar, eine Mehrzahl von Lichtleitfasern an eine Mehrzahl von optischen Elementen anzukoppeln, insbesondere an einen Array von Fotodioden. Das Halbleiterelement kann typischerweise eine Fotodiode aber auch ein senkrecht emittierender Laser (Vertical Cavity Surface Emitting Laser, VCSEL) sein. Hier und im Folgenden wird zur Veranschaulichung die Erfindung an Hand einer Fotodiode gezeigt. Daher wird durchgängig der Begriff Fotodiode verwendet. Die Erfindung lässt sich aber entsprechend auch für optische Sendeelemente, typischerweise VCSELs, einsetzen.

In der zweiten Oberfläche der Fotodiode ist wenigstens eine Vertiefung eingebracht. Wenn mehrere Lichtleitfasern an mehrere, im gleichen Substrat gebildete Fotodioden angekoppelt werden sollen, kann auch eine einzelne Vertiefung für alle Lichtleitfasern vorgesehen werden. Die Lichtleitfaser verläuft im Wesentlichen parallel zu der zweiten Oberfläche. Wenigstens das Ende der Lichtleitfaser ist in der Vertiefung angeordnet. Die Lichtleitfaser lässt sich seitlich von der Fotodiode wegführen. Eine Umlenkanordnung dient zum Umlenken von aus der Lichtleitfaser austretendem Licht oder von in die Lichtleitfaser einzukoppelndem Licht. Gemäss der Erfindung ist die Lichtleitfaser zumindest in ihrem Endbereich wenigstens auf der dem Boden der Vertiefung zugewandten Seite so ausgebildet, dass sie einen Aussendurchmesser aufweist, der im Vergleich zum Aussendurchmesser ausserhalb dieses Endbereichs reduziert ist. Der Endbereich mit reduziertem Aussendurchmesser erstreckt sich typischerweise über wenigstens die Länge der Vertiefung zur Aufnahme der Lichtleitfaser in der Fotodiode.

Dank der Reduktion des Aussendurchmessers der Lichtleitfaser in ihrem Endbereich lässt sich der lichtleitende Kern der Lichtleitfaser sehr nahe an die Oberfläche der Fotodiode bringen. Auf diese Weise ist es möglich, eine Lichtleitfaser in einer Vertiefung auf der Rückseite der Fotodiode anzuordnen, um die Fotodiode rückseitig aus sehr kleinem Abstand zu beleuchten. Dank der Erfindung ist es ausserdem möglich, eine Anordnung zum Ankoppeln von wenigstens einer Lichtleitfaser an ein optisches Empfang- oder Sendeelement mit wenig Bauteilen zu schaffen. Es kann beispielsweise auf zusätzliche Fokussieranordnungen wie Linsen verzichtet werden.

Gemäss einer bevorzugten Ausführungsform der Erfindung ist die Vertiefung in der zweiten Oberfläche der Fotodiode und die Reduktion des Aussendurchmessers der Lichtleitfaser derart gewählt, dass der optische Abstand zwischen der ersten Oberfläche des fotoelektrischen Elementes und dem Zentrum der Lichtleitfaser weniger als 45 um, insbesondere etwa 25 um beträgt. Als optischer Abstand wird der Lichtweg zwischen der ersten Oberfläche des fotoelektrischen Elementes und dem Zentrum der Lichtleitfaser unter Berücksichtigung der jeweiligen Brechungsindizes, das heisst dem Brechungsindex des Halbleitermaterials (ca. 3,2), von Luft und der Glasfaser (ca. 1,46) verstanden. Diese Dimensionierung ist insbesondere bei einer single-mode Faser (mit einem Kerndurchmesser von 9 µm) in Kombination mit einer Höchstfrequenz Fotodiode mit einer Oberfläche mit einem Durchmesser im Bereich von 10 bis 20 µm geeignet. Bei Verwendung von anderen Typen von Lichtleitfasern oder von anderen optischen Elementen können die Dimensionen gegebenenfalls angepasst werden.

Typischerweise ist die Höhe der Vertiefung bezogen auf die Dicke des Halbleiterelementes relativ gross gewählt. Die Höhe kann typischerweise mehr als 70 % der Dicke des Halbleiterelementes betragen. Die verbleibende Höhe des Halbleiterelements im Bereich der Vertiefung kann typischerweise 10 - 40 µm betragen.

Durch gezielte Dimensionierung der Vertiefung im Halbleiterelement und entsprechender Reduktion des Durchmessers der Lichtleitfaser im Endbereich lässt sich die Distanz zwischen dem Kern der Lichtleitfaser und der Diodenfläche so stark reduzieren, dass im wesentlichen der ganze divergierende Lichtstrahl auf die Diodenfläche auftrifft und dass die erfindungsgemässe Anordnung bei Höchstfrequenzanwendungen mit bester Effizienz einsetzbar ist.

Gemäss einer bevorzugten Ausführungsform ist die Endfläche der Lichtleitfaser zum Bilden eines Umlenkspiegels abgeschrägt. Gegebenenfalls kann die abgeschrägte Endfläche mit einer zusätzlichen Reflektionsschicht versehen sein. Es sind aber auch andere Umlenkmittel wie beispielsweise abgeschrägte, in der Fotodiode angebrachte Flächen denkbar.

Die Erfindung eignet sich wie ausgeführt besonders für elektrooptische Elemente, welche als Flip-Chip montiert sind. Besonders bevorzugt ist gemäss der vorliegenden Erfindung eine als Flip-Chip montierte rückseitenbeleuchtete Fotodiode.

Gemäss einer weiteren bevorzugten Ausführungsform der vorliegenden Erfindung hat die Vertiefung in der zweiten Oberfläche der Fotodiode etwa einen U- oder V-förmigen Querschnitt mit einem abgeflachten Boden. Der abgeflachte Boden weist dabei eine Breite auf, die etwa gleich gross oder grösser ist als der Lichtdurchmesser des auftreffenden Lichts oder der reduzierte Aussendurchmesser der Lichtleitfaser in ihrem Endbereich.

Die Lichtleitfaser, insbesondere aber eine Mehrzahl von Lichtleitfasern können in einem separaten Halteteil angeordnet sein, welches bei der vorstehend beschriebenen Anordnung einsetzbar ist. Die Lichtleitfasern sind fest in der Halteanordnung gehalten und werden in die Vertiefungen zur Aufnahme der Lichtleitfasern in der Fotodiode eingelegt. Dank dem Halteteil ist es möglich, eine Mehrzahl von Lichtleitfasern gegenseitig präzise auszurichten und anzuordnen und dann ausgerichtet zu befestigen. Dank der Halterung in einem Halterteil können die Fasern einfach gemeinsam ausgerichtet und befestigt werden.

Gemäss einer weiteren bevorzugten Ausführungsform sind die Lichtleitfasern im durchmesserreduzierten Endbereich im Wesentlichen zylindrisch ausgebildet. Dies heisst, dass der Aussendurchmesser der Lichtleitfaser über den ganzen Umfang gleichmässig reduziert wird. Dadurch wird insbesondere bei sehr kleinen Faserdurchmessern das Einsetzen der Lichtleitfaser oder das Herstellen eines Umlenkspiegels am Faserende vereinfacht, da ein Ausrichten bezogen auf die Achse der Lichtleitfaser entfällt. Ausserdem hat die Rundung der Faser in dem Bereich, wo das Licht austritt einen Linseneffekt. Die Rundung der Faser in einer Ebene senkrecht zur Längsrichtung der Faser trägt zur Fokussierung des austretenden Lichtes in dieser Ebene bei. Dadurch kann der Durchmesser des auf die Diodenfläche auftretenden Lichtflecks weiter reduziert werden. In Richtung der Faser ist dieser Linseneffekt nicht zu beobachten. Dadurch erhält der auf die Fotodiode auftreffende Lichtfleck eine leicht ovale Form. Gemäss einer weiteren bevorzugten Ausführungsform der Erfindung ist es daher denkbar und bevorzugt, die Form der Fotodiodenfläche der Form des auftreffenden Lichtflecks anzupassen, das heisst etwa oval auszubilden. Dadurch kann die Fotodiodenfläche bezogen auf den Lichtfleck weiter optimiert, das heisst in ihrer Grösse reduziert werden. Dadurch ergeben sich noch bessere Eigenschaften bei Höchstfrequenzanwendungen.

Die äussere Schicht der Lichtleitfaser kann typischerweise im Endbereich zur Reduktion des Aussendurchmessers weggeätzt werden. Es sind aber auch andere, beispielsweise mechanische Verfahren denkbar.

Die verwendete Lichtleitfaser ist bevorzugt eine single-mode Faser. Bevorzugt ist das Halbleiterelement als Fotodiode ausgebildet.

Gemäss einem zweiten Aspekt der Erfindung wird eine Halteanordnung zum Halten einer Mehrzahl von in einem Endbereich im Durchmesser reduzierten Lichtleitfasern vorgeschlagen. Die Halteanordnung eignet sich zum Halten einer Mehrzahl von im Endbereich im Durchmesser reduzierten Lichtleitfasern, insbesondere in einer wie vorstehend beschriebenen Anordnung. Sie kann aber auch zum Halten von mehreren Lichtleitfasern im Zusammenhang mit anderen optischen Sende- oder Emfpangselementen, z.B. auf bei von vorne beleuchteten Fotodioden eingesetzt werden. Die Halteanordnung weist einen Haltekörper auf. Am Haltekörper ist eine Mehrzahl von sich über den Haltekörper bis zum einem Ende erstreckenden vorzugsweise an die Faserform angepassten Haltevertiefungen angebracht. Die Haltevertiefungen nehmen je eine Lichtleitfaser auf. Die Lichtleitfasern erstrecken sich bis an wenigstens ein Ende. Gemäss der Erfindung ist der Haltekörper am Ende in einer Endfläche vorzugsweise abgeschrägt. Die Lichtleitfasern weisen dabei je eine in der Endfläche des Haltekörpers liegende abgeschrägte Endfläche auf. Eine solche Halteanordnung lässt sich besonders präzise und einfach herstellen. Die Aufnahmevertiefungen können beispielsweise in einen aus Silizium bestehenden Haltekörper präzise eingeätzt werden. Anschliessend können die Lichtleitfasern in den Vertiefungen befestigt werden. Durch Abschrägen einer Endfläche des Haltekörpers werden gleichzeitig alle Endflächen der verschiedenen Lichtleiterfasern abgeschrägt. Auf diese Weise ist sichergestellt, dass einerseits die Lichtleitfasern genau zueinander ausgerichtet sind und dass andererseits alle Endflächen der Lichtleitfasern gleiche Abschrägungen aufweisen. Auf Grund des Herstellverfahrens weist die ganze Endfläche des Halterteils mit den Endflächen der Fasern eine gleichmässige Struktur und Form auf. Die Endfläche kann mit einer Reflexionsschicht versehen werden.

Das erfindungsgemässe Verfahren dient zum Herstellen einer Anordnung zum Ankoppeln wenigstens einer Lichtleitfaser an ein optisches Empfangs- oder Sendeelement gemäss vorstehender Beschreibung. Dazu werden die folgenden Schritte vorgenommen:

Es wird ein Halbleiterelement bereitgestellt, das eine erste Oberfläche aufweist. Dabei kann es sich typischerweise um eine rückseitig beleuchtete Fotodiode handeln.

Auf einer zweiten, der ersten Oberfläche gegenüberliegenden Oberfläche des Halbleiterelementes wird wenigstens eine Vertiefung angebracht.

Anschliessend wird wenigstens eine Lichtleitfaser bereitgestellt. Der äussere Durchmesser der Lichtleitfaser oder der Lichtleitfasern wird anschliessend in einem Endbereich reduziert. Die Reduktion des Durchmessers erfolgt wenigstens auf einem Umfangsteilabschnitt, besonders bevorzugt jedoch über den ganzen Umfang. Die Lichtleitfaser wird anschliessend mit dem durchmesserreduzierten Endabschnitt in die Vertiefung auf der zweiten Oberfläche des Halbleiterelements eingesetzt.

Gemäss einer bevorzugten Ausführungsform wird die Lichtleitfaser vor dem Einsetzen in die Vertiefung in einem Endbereich abgeschrägt. Ausserdem kann optional die abgeschrägte Endfläche mit einer Reflektionsschicht versehen werden.

Die Erfindung wird im Folgenden in Ausführungsbeispielen und an Hand der Zeichnungen näher erläutert. Es zeigen:
- Figur 1:: Eine schematische Darstellung einer erfindungsgemässen Anordnung im Querschnitt,
- Figur 2:: eine schematische Darstellung der Anordnung aus Figur 1 in einer Draufsicht,
- Figur 3a:: eine schematische Darstellung der Anordnung aus Figur 1 und 2 in einer Stirnansicht,
- Figur 3b:: eine schematische Darstellung einer Anordnung zum Ankoppeln mehrerer Lichtleitfasern in einer Stirnansicht
- Figur 4a:: eine schematische Darstellung einer Haltevorrichtung zum Halten einer Mehrzahl von Lichtleiterfasern in einer Ansicht von unten,
- Figur 4b:: eine schematische Darstellung einer Haltevorrichtung zum Halten einer Mehrzahl von Lichtleitfasern eines Fiber-Ribbon in einer Ansicht von unten,
- Figur 5:: eine schematische Darstellung einer Stirnseite einer erfindungsgemässen Haltevorrichtung, am Beispiel eines von oben beleuchteten Dioden arrays,
- Figur 6:: eine dreidimensionale Darstellung der erfindungsgemässen Haltevorrichtung,
- Figur 7:: eine schematische Darstellung eines alternativen Ausführungsbeispiels der erfindungsgemässen Anordnung im Querschnitt,
- Figur 8:: eine vergrösserte Darstellung der Fotodiodenfläche gemäss Ausschnitt A in Figur 2 und
- Figur 9a/b:: Illustration des Linseneffektes eines Lichtwellenleiters.

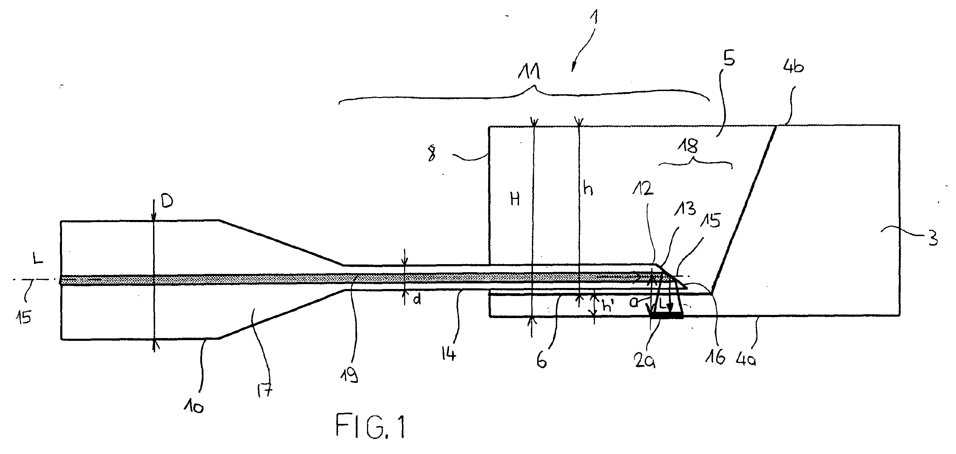

Figur 1 zeigt eine erfindungsgemässe Anordnung 1 zum Einkoppeln von in einer Lichtleitfaser 10 geleitetem Licht L in ein als Fotodiode ausgebildetes fotoelektrisches Halbleiterelement 3. Das Element 3 weist an einer ersten Oberfläche 4a eine aktive Fotodiodenfläche 2a auf. Das Element 3 ist in an sich bekannter Weise als Rückseiten beleuchtete Fotodiode ausgebildet. Es handelt sich typischerweise um eine Fotodiode aus Indium Gallium Arsenid, gewachsen auf Indium Phosphid oder Gallium Arsenid. Das Element 3 ist für das durch die Lichtleitfaser 10 übermittelte Licht L ab einer Wellenlänge von typischerweise 950 nm transparent.

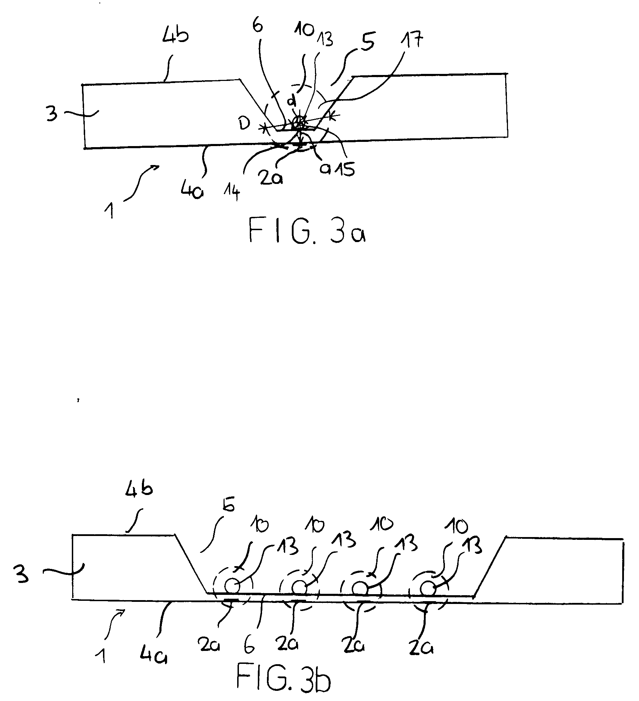

Auf einer der ersten Oberfläche 4a des fotoelektrischen Elements 3 gegenüberliegenden zweiten Oberfläche 4b ist eine Vertiefung 5 im Element 3 angeordnet. Die Vertiefung 5 weist eine verhältnismässig grosse Höhe h und eine kleine verbleibende Höhe h' bezogen auf die Höhe H des Elementes 3 auf. Typischerweise beträgt die verbleibende Höhe h' der Vertiefung 5 etwa 25 µm, während die Höhe H des Elementes 3 etwa 100 µm beträgt. Die Vertiefung 5 befindet sich an einer der Diodenfläche 2a gegenüberliegenden Stelle an der zweiten Oberfläche 4b. Die Vertiefung 5 weist einen etwa U-förmigen Querschnitt (siehe Figur 3) mit einem Boden 6 auf. Die Vertiefung 5 ist auf einer Seite 8 des Elementes 3 offen. Im Bereich der offenen Seite 8 ist die Lichtleitfaser 10 in die Vertiefung 5 eingeführt. Die Vertiefung kann durch Ätzen in das Halbleiterelement eingebracht werden. Die Lichtleitfaser 10 weist in einem Endbereich 11 einen Aussendurchmesser d auf, der im Vergleich zum Aussendurchmesser D ausserhalb des Endbereichs 11 reduziert ist. Typischerweise beträgt der Durchmesser d im Endbereich 11 etwa 20 bis 50 µm, während der Durchmesser D ausserhalb des Endbereichs 11 etwa 125 um betragen kann. Die Lichtleitfaser 10 weist an ihrem Ende 12 eine abgeschrägte Endfläche 13 auf. Das im Kern 19 der Lichtleitfaser 10 geführte Licht L wird an der abgeschrägten Endfläche 13 reflektiert und in Richtung der Fotodiodenfläche 2a des Elementes 3 gelenkt. Die abgeschrägte Endfläche 13 der Lichtleitfaser 10 kann zur Verbesserung der Reflexion mit einer Reflektionsschicht 16 versehen werden. Die Reflektionsschicht 16 kann beispielsweise durch aufgedampftes Metall, wie Silber, Gold oder Aluminium gebildet sein.

Die Lichtleitfaser 10 ist in der Vertiefung 5 nahe zum Boden 6 angeordnet. Der Abstand a zwischen dem Zentrum 15 der Lichtleitfaser 10 und der Fotodiodenfläche 2a des Elements 3 (und daher auch der optische Weg des Lichts) wird dadurch reduziert, typischerweise auf 50 µm. Der optische Weg von etwa 25 um setzt sich zusammen aus 13 um in Glas (geometrische Dicke 20 um), 5 µm in Luft und 7 µm in Halbleitermaterial (geometrische Dicke 25 µm) unter Berücksichtigung der jeweiligen Brechungsindizes. Die Divergenz des Lichtstrahls L nach dem Austritt aus der Lichtleitfaser 10 ist daher verhältnismässig gering, so dass der Spotdurchmesser des auf die Diodenfläche 2a auftretenden Lichtes etwa 12 µm beträgt.

Gemäss der Erfindung ist es an sich ausreichend, dass der Aussendurchmesser d der Lichtleitfaser 10 im Endbereich 11 auf der gegen den Boden 6 gerichteten Seite 14 der Lichtleitfaser 10 reduziert ist. In Figur 1 ist eine (zylindrische) Reduktion des Durchmessers im Endbereich 11 über den ganzen Umfang der Lichtleitfaser 10 gezeigt. Diese bevorzugte Ausführungsform ist insbesondere im Hinblick auf die Ausrichtung der Lichtleitfaser und auf eine zusätzliche Fokussierung des austretenden Lichtes vorteilhaft. Die Reduktion des äusseren Durchmessers d im Endbereich 11 erfolgt gemäss einer Ausführungsform der Erfindung durch Wegätzen eines Teiles der äusseren Schicht 17 der Lichtleitfaser im Endbereich 11. Die äussere Schicht 17 von herkömmlichen Lichtleitfasern besteht aus Quarz-Glas (Silizium Dioxid). Sie lässt sich durch Kontakt mit Flusssäure wegätzen. Durch Eintauchen der Enden der Lichtleitfaser in ein Säurebad erfolgt die Wegätzung homogen. Durch Bestimmung der Zeit, während der das Ende der Lichtleitfaser eingetaucht wird, lässt sich der Grad der Durchmesserreduktion kontrollieren.

In Figur 1 ist als Umlenkanordnung die abgeschrägte Endfläche 13 der Lichtleitfaser 10 gezeigt. Es ist aber auch denkbar, in einem Bereich 18 benachbart zum Ende 12 der Lichtleitfaser 10 getrennte andere Umlenkanordnungen vorzusehen, beispielsweise eine entsprechend geneigte Oberfläche im Halbleiterelement 3.

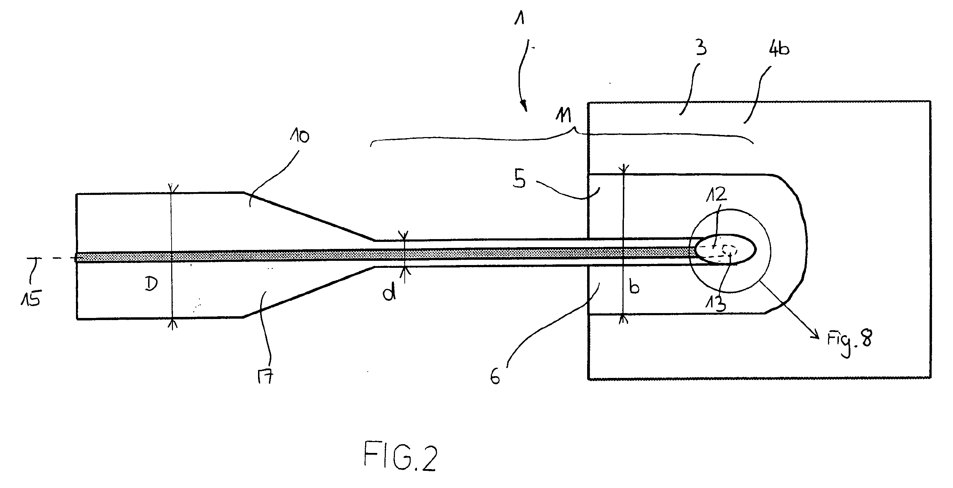

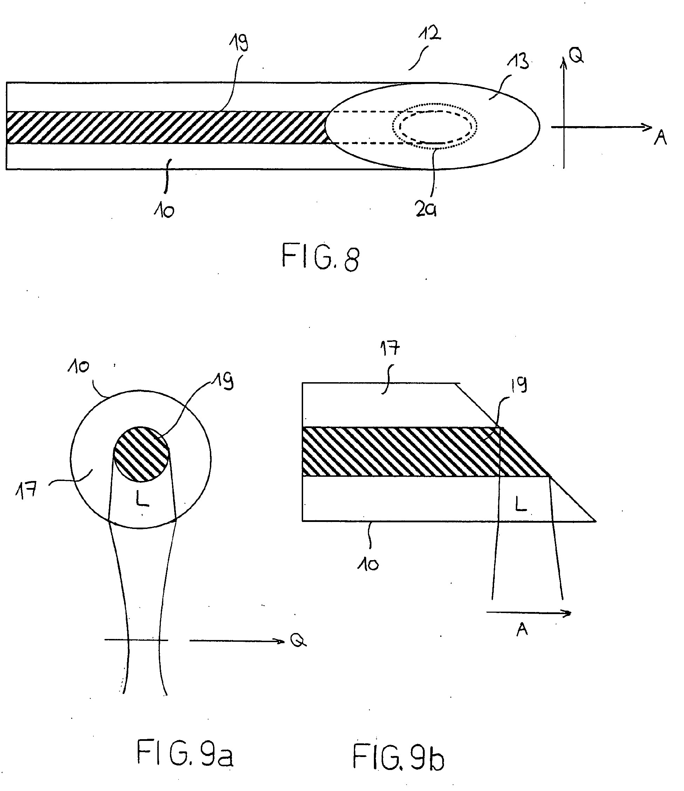

Figur 2 zeigt eine Draufsicht auf die in Figur 1 gezeigte Anordnung. Die Breite b der Vertiefung 5 ist breiter gewählt als der Durchmesser d der Lichtleitfaser 10 im Endbereich 11. Die Breite b kann sich aber bis auf etwa die Grössenordnung des Durchmessers d reduzieren. Das an der abgeschrägten Endfläche 13 umgelenkte Licht L wird auf die Fotodiodenfläche 2a umgelenkt. Die Fotodiodenfläche 2a hat einen Flächeninhalt A von ca. 50 - 300 µm² (siehe auch Figur 8). Die übrigen Bezugszeichen bezeichnen in Figur 2 die gleichen Elemente wie in Figur 1.

Die Fotodiodenfläche 2a wird im Herstellprozess der Fotodiode definiert. Typischerweise ist die Fotodiodenfläche 2a rund ausgebildet. Im Zusammenhang mit dem durch die Lichtleitfaser bewirkten Linseneffekt (siehe Figuren 8, 9a und 9b) ist es aber auch denkbar, die Fotodiodenfläche 2a beispielsweise oval auszubilden.

In Figur 3a ist eine Stirnansicht der erfindungsgemässen Anordnung im Schnitt gezeigt. Die Lichtleitfaser 10 liegt in ihrem Endbereich 11 nahe zum Boden 6 der Vertiefung 5. Der Abstand a zwischen der Fotodiodenfläche 2a der Fotodiode 3 und dem Zentrum der Lichtleitfaser 10 ist auf Grund des reduzierten Aussendurchmessers d gering und beträgt typischerweise reell 50 µm, was einem optischen Abstand von ca. 25 µm entspricht.

In Figur 3b ist eine Anordnung 1 gezeigt, bei der in einer Vertiefung 5 eine Mehrzahl von Lichtleitfasern 10 zum Einkoppeln von Licht auf eine Mehrzahl von Fotodiodenflächen 2a angeordnet ist.

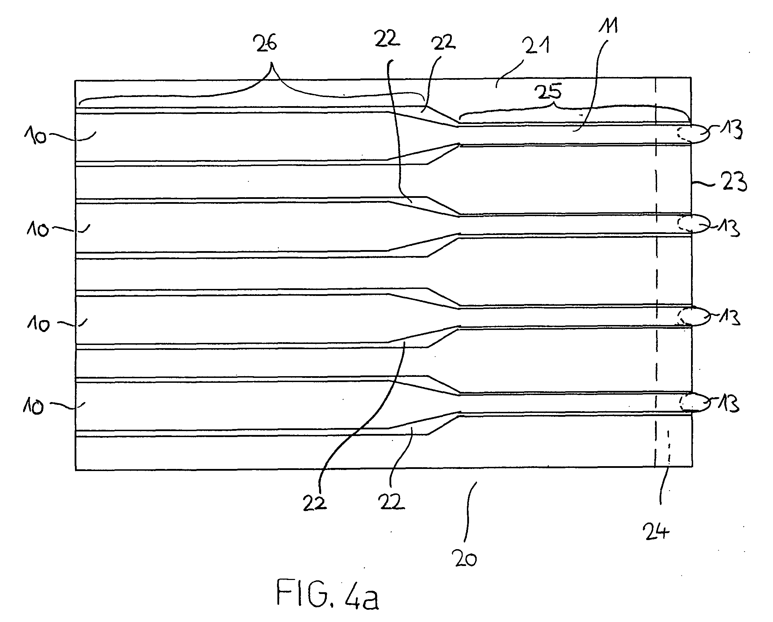

In Figur 4a ist eine Ansicht von unten auf einen Haltekörper 20 zur Aufnahme einer Mehrzahl von Lichtleitfasern 10 gezeigt. Der Haltekörper 20 weist auf seiner einen Oberfläche 21 eine Mehrzahl von parallel zueinander laufenden Haltevertiefungen 22 auf. Die Lichtleitfasern 10 erstrecken sich bis zum einen Ende 23 des Haltekörpers 20. Am Ende 23 des Haltekörpers 20 ist eine abgeschrägte Endfläche 24 vorgesehen. Die Lichtleitfasern 10 weisen je eine abgeschrägte Endfläche 13 auf. Die abgeschrägte Endfläche 13 der Lichtleitfasern 10 liegt in der abgeschrägten Endfläche 24 des Haltekörpers 20. Die Lichtleitfasern 10 können zuerst in einen Halteblock 20 eingelegt werden, der an seinem Ende 23 keine Abschrägung aufweist. Die Lichtleitfasern 10 werden in den Vertiefungen 22 befestigt, beispielsweise mit einem Kleber festgeklebt. Durch Abschrägen der Endfläche 24 werden gleichzeitig die abgeschrägten Endflächen 13 der Lichtleitfasern 10 gebildet. Die Abschrägung kann beispielsweise durch schleifen/polieren erfolgen. Die Lichtleitfasern 10 weisen wie in Figur 1 gezeigt, einen Endabschnitt 11 mit einem reduzierten Faserdurchmesser auf. Die Vertiefungen 22 zur Aufnahme der Lichtleitfasern 10 weisen entsprechend der Form der Lichtleitfaser 10 in einem nahe beim Ende 23 gelegenen Abschnitt 25 eine geringere Breite und in einem vom Ende 23 entfernten Bereich 26 eine grössere Breite auf. Die Form der Haltevertiefungen 22 ist ausser im Übergangsbereich der Form der einzusetzenden Lichtleitfasern angepasst.

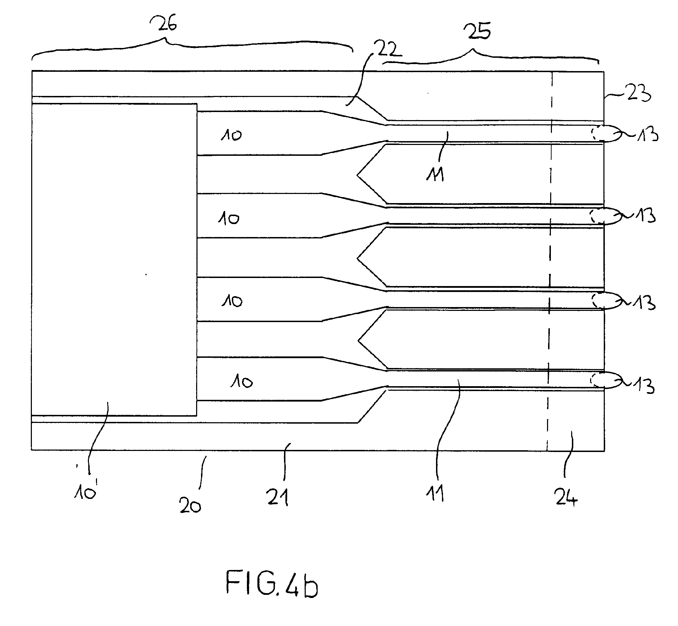

In Figur 4b ist ein alternatives Ausführungsbeispiel gezeigt. Hier wird ein sogenannter Fiber-Ribbon 10' eingesetzt, in dem vier Lichtwellenleiter 10 zu einer Einheit zusammengesetzt sind. Der Ribbon 10' ist an einem Ende durch Ätzen so bearbeitet, dass vier durchmesserreduzierte Faserenden als Endabschnitte 11 vorstehen. Der Haltekörper 20 weist ebenfalls eine Haltevertiefung 22 zur Aufnahme der Enden 11 und des Faser-Ribbons 10' auf. Die Haltevertiefung 22 weist in einem dem Ende 23 des Haltekörpers 20 benachbarten Abschnitt 25 Kanäle zur Aufnahme der Endbereiche 11 der Fasern auf. In dem dem Ende 23 abgewandten Bereich 26 ist eine Vertiefung zur Aufnahme des ganzen Ribbons 10' vorgesehen.

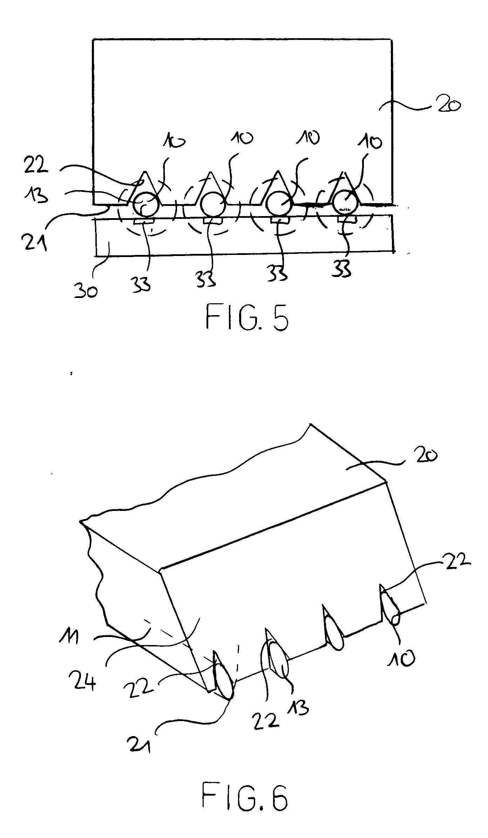

Figur 5 zeigt eine Stirnansicht der Anordnung aus Figur 4a am Beispiel einer Ankopplung an einen von oben beleuchteten Diodenarray 30. Gemäss Figur 5 sind die Vertiefungen 22 an der Oberfläche 21 des Haltekörpers 20 V-förmig. Die Lichtleitfasern 10 sind in den V-förmigen Vertiefungen 22 festgeklebt. Der Haltekörper 20 dient zum ausgerichteten Befestigen der vier gezeigten Lichtleitfasern 10 zum gleichzeitigen Beleuchten von sehr kleinen aktiven Flächen 33 des Fotodiodenarrays 30. Der Haltekörper 20 eignet sich insbesondere aber auch zur Befestigung von mehreren Lichtleitfasern in einer Anordnung gemäss den Figuren 1 bis 3. Der Haltekörper 20 erlaubt es, mehrere Lichtleitfasern 10 mit reduziertem Durchmesser in einem Endbereich 11 sehr präzise und gleichzeitig gemeinsam gegenüber einem Fotodiodenarray anzuordnen und die Kerne der Lichtleitfasern 10 sehr nahe an die aktiven Flächen bzw. an den Diodenarray heranzubringen.

Figur 6 zeigt eine dreidimensionale Anordnung der Haltevorrichtung gemäss Figuren 4a, 4b und 5. Die abgeschrägte Endfläche 24 liegt in Figur 6 vorne. Die abgeschrägten Endflächen 13 der in die Vertiefungen 22 eingesetzten Lichtleitfasern 10 liegen mit ihrem reduzierten Teil 11 in der abgeschrägten Endfläche 24 des Haltekörpers 20.

In Figuren 4a und 4b ist jeweils der Durchmesser reduzierte Endbereich 11 des Lichtwellenleiters 10 gezeigt, in welchem das Cladding des Lichtwellenleiters 10 zu grossen Teilen weggeäzt ist. Im nicht Durchmesser reduzierten Teil des Lichtwellenleiters ist das Cladding im Wesentlichen vollständig. In diesem Bereich wurde jedoch insbesondere zur Einbettung des Lichtwellenleiters 10 das meist aus einem Kunststoffmaterial bestehende Coating entfernt. Die Haltevertiefung 22 kann beim Ausführungsbeispiel gemäss Figur 4a in einem noch weiter vom Ende 23 des Halteblocks 20 entfernten Abschnitt weiter verbreitet werden, so dass der ganze Lichtwellenleiter inklusive Coating in der Halteanordnung 20 gehalten werden kann.

Der Haltekörper kann beispielsweise aus Silizium bestehen. Die Vertiefungen 22 können präzise in das Silizium eingeätzt werden. Die Lichtleitfasern werden beispielsweise mit Epoxy in den Vertiefungen 22 eingeklebt. Die Abschrägung der Endfläche 24 erfolgt beispielsweise durch schleifen und polieren. Auch Metallisierung der Faser und Halterung durch anschliessendes Einlöten ist möglich.

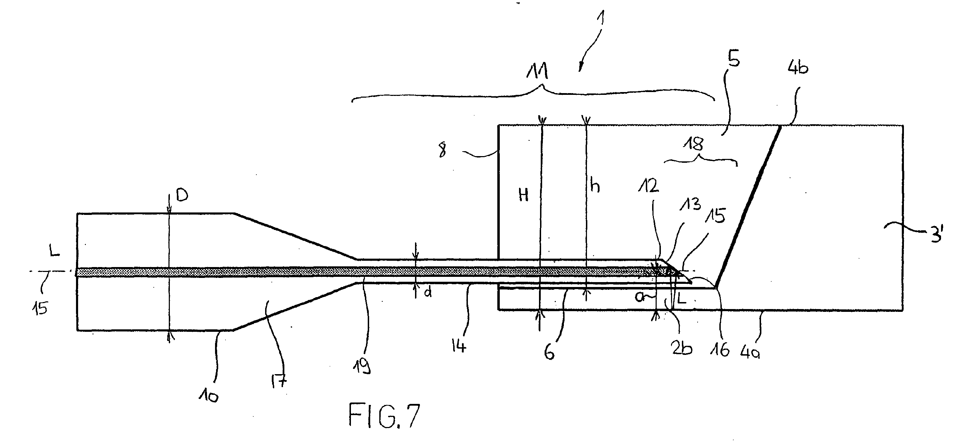

In Figur 7 ist ein alternatives Ausführungsbeispiel einer erfindungsgemässen Anordnung gezeigt. Gleiche Hinweisnummern bezeichnen gleiche Teile wie in Figur 1. Das optische Element ist als senkrecht emittierender (VCSEL) Halbleiterlaser 3' ausgebildet. Die Anordnung gemäss Figur 7 dient zum Einkoppeln von in einer aktiven Zone 2b eines Halbleiterlasers erzeugtem Licht L in die Lichtleitfaser 10. Während beim Ausführungsbeispiel gemäss Figur 1 die Neigung der abgeschrägten Endfläche 13 von geringerer Bedeutung ist, muss im Ausführungsbeispiel gemäss Figur 7 sichergestellt werden, dass das Licht L richtig in die Lichtleitfaser 10 eingekoppelt werden kann. Dazu ist die abgeschrägte Endfläche 13 typischerweise unter einem Winkel von 45° abgeschrägt und zusätzlich mit einer Reflektionsschicht 16 versehen.

Figur 8 zeigt eine vergrösserte Darstellung des Endes 12 des Lichtwellenleiters 10. Im Kern 19 des Lichtwellenleiters 10 geführtes Licht wird an der abgeschrägten Endfläche 13 umgelenkt. Das Licht trifft auf Grund einer Fokussierung an der Rundung des Lichtwellenleiters (siehe auch Figur 9a und 9b) in einem elliptischen Lichtfleck auf dem Halbleiterelement 3 auf. Die Fläche 2a der Fotodiode kann ebenfalls elliptisch ausgebildet sein, so dass die Form der Fotodiodenfläche 2a der Form des auftreffenden Lichtspots entspricht.

In Figur 9a ist schematisch der Fokussierungseffekt des übrigbleibenden abgerundeten Teils der Schicht 17 des Lichtwellenleiters 10 gezeigt. Das am Ende des Lichtwellenleiters 10 an der abgeschrägten Endfläche 13 umgelenkte Licht L tritt aus dem Kern 19 aus und durchquert den übrigbleibenden Teil der Schicht 17 des Lichtwellenleiters 10. Dabei divergiert das Licht L bereits innerhalb des Lichtwellenleiters 10. Bei Austritt des Lichtes L aus der Schicht 17 des Lichtwellenleiters 10, welche aus Glas besteht, in das Medium Luft erfolgt eine Fokussierung des Lichts L, so dass die Dimension des auf der Fotodiodenfläche 2a auftreffenden Lichtflecks in einer Richtung Q quer zur Faserlängsrichtung reduziert wird.

In Figur 9b ist das Ende des Lichtwellenleiters 10 in einer Seitenansicht gezeigt. Das im Kern 19 geführte Licht wird an der Endfläche 13 umgelenkt. Bereits im Bereich des übrigbleibenden Rests der äusseren Schicht 17 divergiert der Lichtstrahl L innerhalb des Lichtwellenleiters 10. Auf Grund der geraden Unterseite des Lichtwellenleiters 10 erfolgt bei Austritt des Lichtstrahls L aus der Schicht 17 nur eine Brechung, aber keine Fokussierung in einer Richtung A parallel zur Richtung des Lichtwellenleiters 10. Dadurch ergibt sich ein auf der Fotodiodenfläche 2a auftreffender Lichtfleck, der in eine Richtung Q quer zur Faserrichtung eine geringere Dimension aufweist als in einer Richtung A parallel zur Faserrichtung (siehe auch Figur 8).

## Patentansprüche

1. Anordnung (1) zum Ankoppeln wenigstens einer Lichtleitfaser (10) an wenigstens ein optisches Empfangs- oder Sendeelement (3), wobei das Empfangs- oder Sendeelement (3) ein Halbleiterelement aufweist, das mit einer ersten und einer zweiten, der ersten Oberfläche gegenüberliegenden Oberfläche (4a, 4b) versehen ist, und
wobei in der zweiten Oberfläche (4b) wenigstens eine Vertiefung (5) eingebracht ist,
wobei die Lichtleitfaser (10) wenigstens mit einer Endfläche (13) in der Vertiefung (5) angeordnet ist und
wobei in einem Bereich (18) benachbart zum Ende (12) der Lichtleitfaser (10) eine Umlenkanordnung (13) zum Umlenken von aus der Faser austretendem oder in die Faser einzukoppelndem Licht (L) vorgesehen ist
**dadurch gekennzeichnet, dass** die Lichtleitfaser (10) in einem Endbereich (11) zumindest auf der dem Boden (6) der Vertiefung (5) zugewandten Seite (14) einen Aussendurchmesser (d) aufweist, der kleiner ist als der Aussendurchmesser (D) ausserhalb des Endbereichs (11).

2. Anordnung nach Anspruch 1, **dadurch gekennzeichnet, dass** die Höhe (h) der Vertiefung (5) und der Aussendurchmesser (d) der Lichtleitfaser (10) im Endbereich (11) derart gewählt sind, dass der optische Abstand zwischen der ersten Oberfläche (4a), insbesondere der Fotodiodenfläche (2a) des fotoelektrischen Elementes (3) und dem Zentrum (15) der Lichtleitfaser (10) kleiner als 45 µm, insbesondere etwa 25 µm ist.

3. Anordnung nach einem der Ansprüche 1 oder 2, **dadurch gekennzeichnet, dass** die Fotodiodenfläche (2a) des Halbleiterelementes (3) kleiner als 20 x 20 µm ist.

4. Anordnung nach Anspruch 3, **dadurch gekennzeichnet, dass** die Form der Fotodiodenfläche (2a) der Form des auftreffenden Lichtflecks angepasst ist, insbesondere elliptisch ausgebildet ist.

5. Anordnung nach einem der Ansprüche 1 bis 4, **dadurch gekennzeichnet, dass** die Höhe (h) der Vertiefung (5) grösser als 70% der Dicke (H) des Elementes (3) ist.

6. Anordnung nach einem der Ansprüche 1 bis 5, **dadurch gekennzeichnet, dass** die verbleibende Höhe (h') im Bereich der Vertiefung (5) etwa 10 -40 µm beträgt.

7. Anordnung nach einem der Ansprüche 1 bis 6, **dadurch gekennzeichnet, dass** die Endfläche (13) der Lichtleitfaser (10) zum Bilden eines Umlenkspiegels abgeschrägt ist.

8. Anordnung nach Anspruch 7, **dadurch gekennzeichnet, dass** die abgeschrägte Endfläche (13) der Lichtleitfaser (10) mit einer Reflektionsschicht (16) versehen ist.

9. Anordnung nach einem der Ansprüche 1 bis 8, **dadurch gekennzeichnet, dass** das Halbleiterelement (3) als Flip-Chip montiert ist.

10. Anordnung nach einem der Ansprüche 1 bis 9, **dadurch gekennzeichnet, dass** die Vertiefung (5) einen etwa U-förmigen Querschnitt mit einem abgeflachten Boden (6) aufweist, wobei insbesondere die Breite (b) des Bodens (6) wenigstens dem Lichtdurchmesser auf dem Boden oder wenigstens etwa dem Aussendurchmesser (d) der Lichtleitfaser (10) im Endbereich (11) entspricht.

11. Anordnung nach einem der Ansprüche 1 bis 10, **dadurch gekennzeichnet, dass** die wenigstens eine Lichtleitfaser (10) in einem separaten Halteteil (20) angeordnet ist, welches auf dem Element (3) aufsetzbar oder aufgesetzt ist.

12. Anordnung nach einem der Ansprüche 1 bis 11, **dadurch gekennzeichnet, dass** die Lichtleitfaser (10) im durchmesserreduzierten Endbereich (11) im Wesentlichen zylindrisch ausgebildet ist.

13. Anordnung nach einem der Ansprüche 1 bis 12, **dadurch gekennzeichnet, dass** eine äussere Schicht (17) der Lichtleitfaser (10) im Endbereich (11) weggeätzt ist.

14. Anordnung nach einem der Ansprüche 1 bis 13, **dadurch gekennzeichnet, dass** die Lichtleitfaser (10) eine single-mode Faser ist.

15. Anordnung nach einem der Ansprüche 1 bis 14, **dadurch gekennzeichnet, dass** das Halbleiterelement eine Fotodiode (3) ist.

16. Anordnung nach einem der Ansprüche 1 bis 14, **dadurch gekennzeichnet, dass** das Halbleiterelement ein Vertical Cavity Surface Emitting Laser (VCSEL) ist.

17. Halteanordnung zum Halten einer Mehrzahl von Lichtleitfasern (10), insbesondere in einer Anordnung (1) nach einem der Ansprüche 1 bis 16,
mit einem Haltekörper (20) in dessen eine Oberfläche (21) eine Mehrzahl von sich über den Haltekörper (20) bis zu einem Ende (23) erstreckenden Haltevertiefungen (22) angebracht sind, wobei in den Haltevertiefungen (22) je eine, in einem Endbereich (11) einen reduzierten Durchmesser (d) aufweisende Lichtleitfaser (10) befestigt ist, welche sich bis an das Ende (23) des Haltekörpers (20) erstreckt,
wobei insbesondere der Haltekörper (20) an dem Ende (23) in einer Endfläche (24) abgeschrägt ist und die Lichtleitfasern (10) eine in der Endfläche (24) des Haltekörpers (20) liegende abgeschrägte Endfläche (13) aufweisen.

18. Verfahren zum Herstellen einer Anordnung (1) zum Ankoppeln wenigstens einer Lichtleitfaser (10) an ein optisches Empfangs- oder Sendeelement (2a, 2b), bestehend aus den Schritten:
- Bereitstellen eines fotoelektrischen Halbleiterelementes (3), mit einer ersten und einer zweiten Oberfläche (4a, 4b)
- Anbringen wenigstens einer Vertiefung (5) auf der zweiten Oberfläche (4b) des Halbleiterelements (3)
- Bereitstellen wenigstens einer Lichtleitfaser (10)
- Reduzieren des äusseren Durchmessers (d) der Lichtleitfaser (10) in einem Endbereich (11) wenigstens auf einem Umfangsteilbereich
- Einsetzen der Lichtleitfaser (10) in die Vertiefung (5), so dass wenigstens der Endbereich (11) in der Vertiefung (5) liegt.

19. Verfahren nach Anspruch 18, **dadurch gekennzeichnet, dass** vor dem Einsetzen der Lichtleitfaser (10) die Lichtleitfaser (10) an einer Endfläche (13) abgeschrägt wird.

20. Verfahren nach Anspruch 19, **dadurch gekennzeichnet, dass** die abgeschrägte Endfläche (13) mit einer Reflexionsschicht (16) versehen wird.

21. Verfahren zum Herstellen einer Halteanordnung für eine Mehrzahl von Lichtleitfasern (10) insbesondere nach Anspruch 17, bestehend aus den Schritten
- Bereitstellen eines Haltekörpers (20) mit einer Mehrzahl von Haltevertiefungen (22) zur Aufnahme je einer in einem Endbereich (11) im Durchmesser reduzierten Lichtleitfaser (10)
- Einsetzen je einer Lichtleitfaser (10) mit einem in einem Endbereich (11) reduzierten Faserdurchmesser (d) in eine der Haltevertiefungen (22)
- vorzugsweise Abschrägen des Haltekörpers (20) an einem Ende (23), wobei gleichzeitig eine abgeschrägte Endfläche (24) des Haltekörpers (20) und in der Endfläche (24) liegende abgeschrägte Endflächen (13) der Lichtleitfasern (10) gebildet werden.

22. Verfahren nach Anspruch 21, **dadurch gekennzeichnet, dass** ein Faser-Ribbon (10') in den Haltekörper (20) eingesetzt wird, wobei vorstehende im Durchmesser reduzierte Endbereiche (11) der Fasern des Faser-Ribbons (10') in die Haltevertiefungen (22) eingesetzt werden.

23. Verfahren nach einem der Ansprüche 21 oder 22, **dadurch gekennzeichnet, dass** die abgeschrägte Endfläche (24) mit einer Reflexionsschicht (16) versehen wird.
